## Europäisches Patentamt

## European Patent Office

## Office européen des brevets

(11) Numéro de publication: **0 142 412**
**B1**

## (12) FASCICULE DE BREVET EUROPÉEN

(45) Date de publication du fascicule du brevet:
13.09.89

(21) Numéro de dépôt: **84402060.2**

(22) Date de dépôt: **12.10.84**

(51) Int. Cl.⁴: **G 06 F 7/58,** G 06 F 1/02,
G 06 F 11/26, G 01 R 31/28

(54) Dispositif de transformation de la probabilité d'apparition de vecteurs logiques et de génération de séquences de vecteurs à probabilités variables dans le temps.

(30) Priorité: **13.10.83 FR 8316285**

(43) Date de publication de la demande:
**22.05.85 Bulletin 85/21**

(45) Mention de la délivrance du brevet:
**13.09.89 Bulletin 89/37**

(84) Etats contractants désignés:
**CH DE FR GB LI NL**

(56) Documents cité:
**US-A-4 161 041**

**ELECTRONICS LETTERS, vol. 10, no. 8, 18 avril 1974, pages 127-128, Hitchin Herts, GB; A.J. WALKER: "New fast method for generating discrete random numbers with arbitrary frequency distributions"**

(73) Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **David, René, 16, rue du Rafour Le Fontame, F-38120 Saint- Egreve (FR)**
Inventeur: **Fedi, Xavier, 19, rue Garcia Lorca, F-38400 Saint- Martin d'Heres (FR)**

(74) Mandataire: **Bruder, Michel, Cabinet Michel Bruder Conseil en Brevets 10, rue de la Pépinière, F-75008 Paris (FR)**

LIBER, STOCKHOLM 1989

## Description

La présente invention concerne un dispositif de transformation de la probabilité d'apparition de vecteurs logiques et de génération de séquences de vecteurs à probabilités variables dans le temps, applicable notamment à la réalisation d'un dispositif de test aléatoire pour circuits logiques, notamment microprocesseurs.

Dans divers domaines du traitement de l'information, il est nécessaire de pouvoir disposer. Pour des applications particulières, de séquences de vecteurs logiques à probabilités données. Tel est par exemple le cas des dispositifs de test aléatoire pour circuits logiques tels que les microprocesseurs. En effet pour effectuer un contrôle de circuits logiques tels que des microprocesseurs, on compare le fonctionnement de deux de ces microprocesseurs à savoir un microprocesseur de référence et le microprocesseur soumis au test. A cet effet on envoie en parallèle aux deux microprocesseurs une séquence d'instructions et de commandes et on effectue une comparaison bit à bit des sorties des deux microprocesseurs. Toute discordance apparaissant lors de cette comparaison permet de détecter un défaut du microprocesseur soumis au test.

On connaît déjà des générateurs de séquences de vecteurs tels que décrits dans le brevet US-A-4 161 041 et dans l'article de la revue Electronics Letters, vol. 10, n° 8, 18 Avril 1974, pages 127-128, Hitchin Herts (GB), WALKER: "New Fast Method For Generating Discrete Random Numbers With Arbitrary Frequency Distributions". Ces générateurs utilisent une mémoire et le générateur décrit dans l'article de la revue Electronics Letters permet de produire des vecteurs avec une probabilité d'apparition arbitraire.

La présente invention a pour but de procurer un dispositif de transformation de la probabilité d'apparition de vecteurs logiques de manière à produire à la sortie de ce dispositif, des séquences de vecteurs à probabilités données, à partir de vecteurs d'entrée qui peuvent être équiprobables ou avoir eux-mêmes des probabilités d'apparition différentes, ce dispositif pouvant être avantageusement utilisé pour la production de séquences de vecteurs à probabilités données appliqués en parallèle à deux circuits logiques, afin de comparer le fonctionnement de l'un de ces circuits par rapport à un autre circuit de référence.

A cet effet ce dispositif de transformation de la probabilité d'apparition de vecteurs logiques, comportant une mémoire ou un circuit équivalent à laquelle sont appliqués des vecteurs logiques d'entrée ayant des probabilités d'apparition respectives différentes ou égales, chaque vecteur d'entrée adressant une position élémentaire différente de la mémoire, est caractérisé en ce que ladite mémoire contient, dans des zones respectives d'étendues différentes, les différentes catégories de vecteurs de sortie c'est-à-dire chaque vecteur de sortie est stocké un nombre de fois dans différentes positions élémentaires de la mémoire, de manière que la probabilité d'apparition de ce vecteur qu'on peut obtenir en sortie dépend à la fois du nombre de positions élémentaires qu'englobe cette zone, et des probabilités respectives des vecteurs d'entrée qui adressent les positions élémentaires de cette zone.

L'invention a également pour objet un dispositif générateur de séquences de vecteurs à probabilités variables dans le temps, utilisant au moins un dispositif de transformation de la probabilité d'apparition de vecteurs logiques tel que ci-dessus spécifié, caractérisé en ce qu'il comporte des mémoires ou circuits équivalents contenant les différentes catégories de vecteurs ainsi que l'information nécessaire à l'identification de ces différentes catégories, et un séquenceur à base de circuits logiques permettant le séquencement des différents types de vecteurs dans le temps, en fonction de relations données, les sorties des mémoires ou circuits équivalents étant connectées, par l'intermédiaire d'aiguillages, à un ou plusieurs circuits destinés à les recevoir, tels que par exemple, des microprocesseurs.

Une application particulière de l'invention est constituée par un dispositif de test aléatoire pour circuits logiques, notamment microprocesseurs, utilisant au moins un dispositif de transformation de la probabilité de vecteurs logiques. Ce dispositif de test aléatoire comportant une unité centrale, un générateur de séquences aléatoires d'instructions et de commandes appliquées en parallèle à un microprocesseur de référence et au microprocesseur sous test, un comparateur aux entrées duquel sont connectées les sorties données, adresses et contrôle de chaque microprocesseur et dont la sortie est connectée à l'unité centrale, est caractérisé en plus en ce que le générateur de séquences aléatoires comporte un registre à décalage bouclé en générateur de séquences de période maximale par un circuit OU exclusif, les cellules du registre correspondant à des bits de rangs définis par une relation mathématique connue étant connectées aux entrées du circuit OU exclusif, si bien que le registre à décalage permet une génération pseudo-aléatoire de vecteurs équiprobables, qui sont appliqués à un générateur de séquences de vecteurs à probabilités données lequel comporte des mémoires ou circuits équivalents contenant les différentes catégories de vecteurs ainsi que l'information nécessaire à l'identification de ces différentes catégories, et un séquenceur à base de circuits logiques permettant le séquencement des différents types de vecteurs dans le temps, en fonction de relations données, les sorties des mémoires étant connectées, par l'intermédiaire d'aiguillages, à la fois au microprocesseur de référence et au microprocesseur sous test.

Le dispositif de test aléatoire comporte, par exemple, en ce qui concerne les instructions, trois mémoires à savoir une première mémoire pour stocker les données, une deuxième mémoire pour stocker les codes opérations et une troisième mémoire pour stocker les nombres de cycles correspondant aux divers codes opérations, d'une part, et une quatrième mémoire pour stocker les types de commande et une cinquième mémoire pour stocker les nombres de cycles correspondant aux diverses commandes respectives, d'autre part, les sorties des première et deuxième mémoire étant connectées, respectivement par des bus, à un premier aiguillage dont le sortie est reliée en parallèle, par un bus données, au microprocesseur de référence et au microprocesseur sous test, la sortie de la troisième mémoire étant reliée en parallèle, par l'intermédiaire d'un bus, à un premier compteur commandant, par une liaison, le premier aiguillage, la sortie de la quatrième mémoire étant connectée, à travers un second aiguillage, à un bus commandes relié en parallèle aux deux microprocesseurs, la cinquième mémoire étant connectée par sa sortie d'une part au premier compteur et d'autre part à un second compteur commandant le second aiguillage.

Le dispositif de test aléatoire suivant l'invention offre l'avantage qu'il permet d'affecter des probabilités à chaque vecteur et non plus à chaque bit d'un vecteur comme il était connu antérieurement. Par ailleurs il permet de fournir une séquence de vecteurs qui est constituée de vecteurs qui sont tirés dans des champs de mémoires différents (avec des probabilités différentes) en respectant certaines contraintes (le nombre d'octets quelconques suivant un code opération dépendant de ce code opération). En outre, une séquence de vecteurs de commande élaborée en parallèle avec la première réagit sur l'élaboration de la première séquence de vecteurs.

On décrira ci-après, à titre d'exemple non limitatif, diverses formes d'exécution de la présente invention, en référence au dessin annexé sur lequel:

La figure 1 est un schéma synoptique d'un dispositif de transformation de la probabilité d'apparition de vecteurs logiques.

La figure 2 est un schéma synoptique du dispositif dans une application avec une mémoire à seize zones positions élémentaires et, des vecteurs d'entrée équiprobables.

La figure 3 est un schéma synoptique d'une application à un dispositif de test aléatoire pour microprocesseurs.

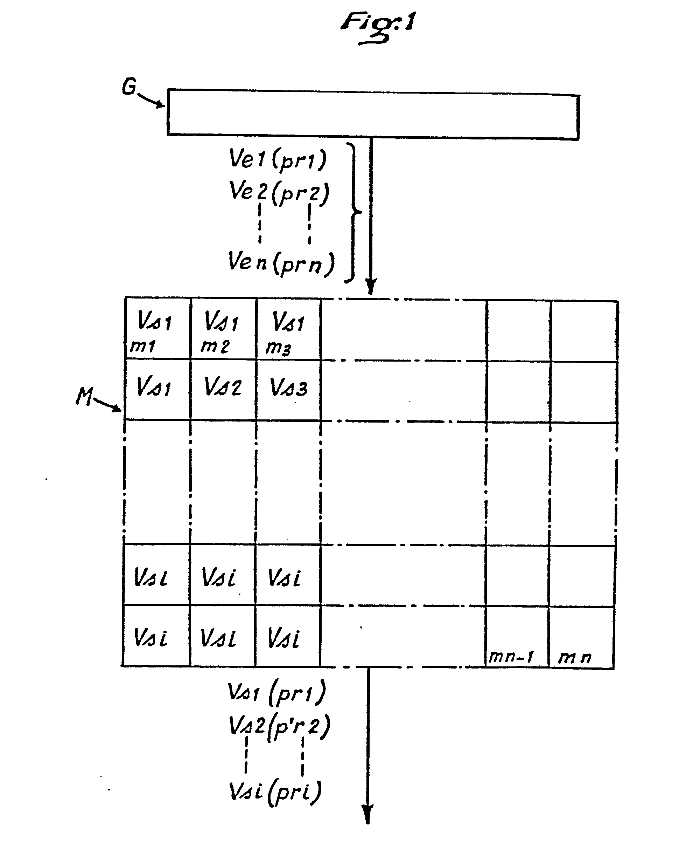

Le dispositif suivant l'invention qui est représenté schématiquement sur la figure 1 comprend une mémoire M à n positions élémentaires $m_1$, $m_2$ ... $m_n$ dans chacune desquelles peut être stocké un vecteur logique constitué d'une suite de bits, formant par exemple un octet. Le champ total de la mémoire est subdivisé en un certain nombre de zones d'étendues différentes, suivant les probabilités d'apparition que l'on veut obtenir, à la sortie de la mémoire M, pour les différents vecteurs logiques contenus dans cette mémoire. La mémoire M est adressée au moyen d'un générateur G délivrant à sa sortie des vecteurs logiques d'entrée $Ve_1$, $Ve_2$ ... $Ve_n$ correspondant chacun à une adresse respective dans la mémoire M. Le vecteur $Ve_1$ est affecté à l'adresse de la position élémentaire $m_1$, le vecteur $Ve_2$ à l'adresse de la position $m_2$, etc. Les probabilités d'apparition $pr_1$, $pr_2$ ... $pr_n$ des vecteurs logiques d'entrée $Ve_1$, $Ve_2$ ... $Ve_n$ peuvent être les mêmes ou au contraire différentes les unes des autres, suivant la structure du générateur de vecteurs G.

Suivant l'invention on charge dans la mémoire M les vecteurs de sortie que l'on désire obtenir de manière que ceux-ci occupent, dans la mémoire M, des zones d'étendues différentes, autrement dit qu'ils soient stockés en nombres différents dans cette mémoire. Par exemple le vecteur de sortie $Vs_1$ peut être stocké dans les trois premières positions élémentaires d'adresse $m_1$, $m_2$, $m_3$ alors qu'un autre vecteur de sortie tel que le vecteur $Vs_5$ peut être stocké dans six autres positions élémentaires de la mémoire M. On voit donc que les probabilités d'apparition $p'r_1$, $p'r_2$, ... $p'r_i$ des vecteurs de sortie respectifs $Vs_1$, $Vs_2$ ... $Vs_i$ dépendent à la fois de l'étendue des zones de la mémoire M dans lesquelles sont stockés ces divers vecteurs de sortie et de la probabilité d'apparition des vecteurs d'entrée $Ve_1$, $Ve_2$ ... $Ve_n$ affectés aux différentes adresses des positions élémentaires de la mémoire.

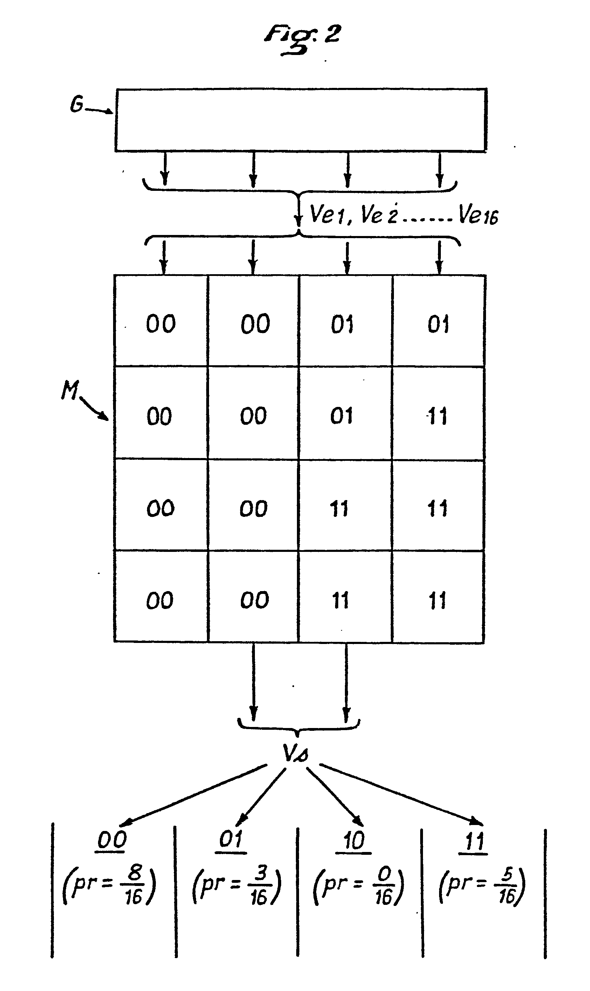

La figure 2 illustre schématiquement, à titre d'exemple, le cas où l'on utilise une mémoire M à seize positions élémentaires contenant deux bits chacune et par conséquent le générateur de vecteurs logiques d'entrée émet à sa sortie seize vecteurs $Ve_1$, $Ve_2$ ... $Ve_{16}$, ces vecteurs étant équiprobables. Ces seize vecteurs sont affectés respectivement aux adresses des seize positions de mémoire.

On a représenté, sur la figure 2, un vecteur logique 00 stocké dans huit positions de mémoire, un vecteur logique 01 stocké dans trois positions de mémoire, un vecteur logique 11 stocké dans cinq positions de mémoire, alors que le vecteur logique 10 n'est pas stocké dans la mémoire M. Il résulte que la probabilité par d'apparition du vecteur logique de sortie 00 est de 8/16, celle du vecteur 01 est de 3/16, celle du vecteur 10 est égale à 0 et celle du vecteur 11 est de 5/16. On voit donc que l'on peut faire varier ces probabilités d'apparition en modifiant le plan de chargement de la mémoire.

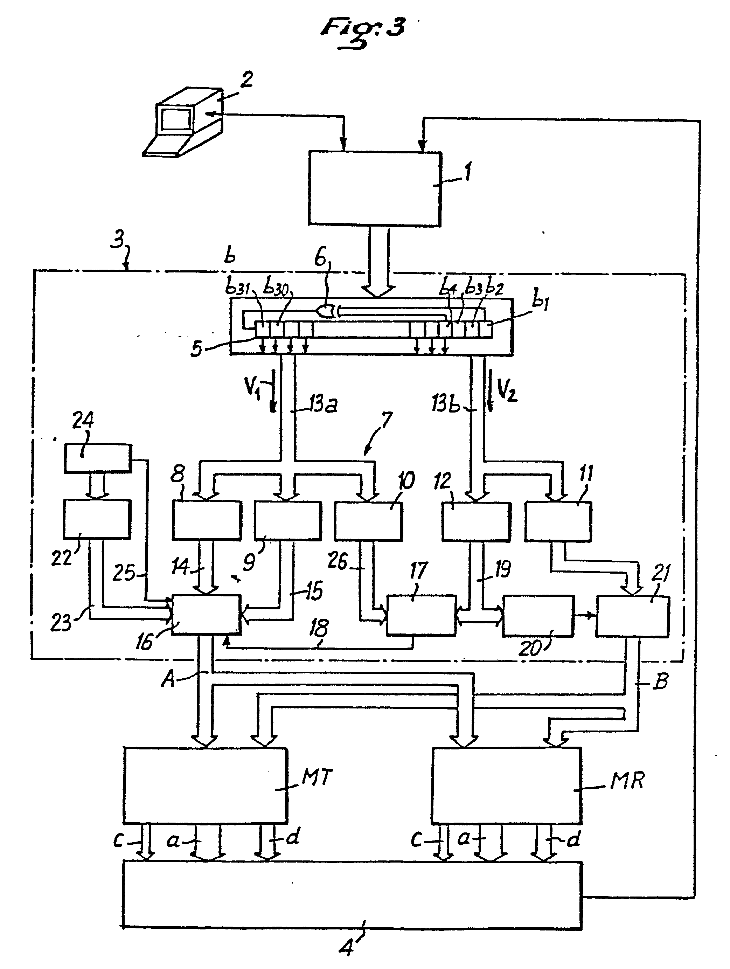

On décrira maintenant, en se référant à la figure 3, une forme d'application particulière de l'invention permettant de réaliser un test aléatoire sur des circuits logiques tels que des microprocesseurs.

Le dispositif de test aléatoire représenté sur la figure 3 comporte une unité centrale 1 constituée, par exemple, par une carte 80-10 INTEL, reliée à une console de visualisation 2 afin de permettre un dialogue avec l'opérateur. Cette unité centrale 1 est connectée à un générateur 3 produisant à sa sortie, pendant le test, une séquence aléatoire d'instructions sur des données aléatoires, sur un bus données A, et parallèlement des commandes envoyées, également d'une manière aléatoire, sur un bus B. Les deux bus A et B sont respectivement connectés à un microprocesseur de référence MR et à un microprocesseur que l'on soumet au test MT. Les sorties données, adresses et contrôle de ces microprocesseurs sont transmises, respectivement par des bus d, a et c, aux entrées correspondantes d'un comparateur 4 qui effectue ainsi une comparaison bit à bit des sorties des deux microprocesseurs MR et MT. La sortie du comparateur 4 est reliée à l'unité de commande 1 qui permet, outre le dialogue avec l'opérateur par l'intermédiaire de la console de visualisation 2, l'initialisation et la production de certains paramètres du générateur 3 et l'exploitation des résultats du test.

Le générateur 3 comprend un registre à décalage 5 bouclé en générateur de séquence de période maximale par un circuit OU exclusif 6. Ce registre permet une génération pseudo-aléatoire de vecteurs équiprobables. Par vecteur on entend la combinaison d'un ensemble de bits juxtaposés dans le registre 5. Ce registre à décalage peut comporter, par exemple, 31 cellules correspondant aux bits $b_1$, $b_2$ ... $b_{31}$. Pour obtenir, dans la cellule correspondant au bit $b_{31}$, une succession de bits constituant une séquence pseudo-aléatoire, les cellules correspondant aux bits de rangs $b_1$ et $b_4$ sont connectées aux entrées du circuit OU exclusif 6.

Le circuit ainsi défini réalise, à chaque top d'horloge, un décalage qui donne les valeurs des 31 bits au temps t + 1 en fonction des 31 bits au temps t.

Parmi les bits $b_1$, $b_2$ ... $b_{31}$, un certain nombre, par exemple 28, à savoir les bits $b_4$ ... $b_{31}$ sont utilisés pour constituer les vecteurs équiprobables.

Pour permettre l'indépendance de deux vecteurs consécutifs, l'équivalence de vingt-huit décalages est réalisée à chaque top d'horloge en effectuant vingt-huit rebouclages au lieu d'un. Le circuit réalisé n'est donc pas exactement celui indiqué mais un circuit qui s'en déduit facilement de façon qu'un top d'horloge donne les valeurs qui auraient été obtenues au temps t + 28, en fonction des 31 bits au temps t.

Le nombre de vecteurs indépendants consécutifs que l'on peut obtenir est égal à $2^n - 1$, n étant le nombre de cellules du registre à décalage 5 (n = 31 dans le cas particulier considéré). Pour avoir le nombre de vecteurs maximal il faut que le nombre N de bits des vecteurs, 28 dans l'exemple considéré, et $2^n - 1$ soient des nombres premiers entre eux.

Les vecteurs équiprobables de 28 bits issus du registre à décalage 5 sont appliqués à un générateur 7 de séquences de vecteurs à probabilités données qui est en fait du type décrit ci-dessus en référence à la figure 2. Le but de ce générateur est de produire, à partir de la séquence aléatoire de vecteurs équiprobables fournis par le registre à décalage 5, une séquence aléatoire d'instructions (ou de codes d'opérations) suivies de données ainsi que de commandes. Dans le cas particulier où le microprocesseur soumis au test est du type M 6800, le champ des instructions peut être limité aux 197 codes d'opérations de ce microprocesseur alors que le champ des données peut couvrir les 256 configurations possibles des mots à 8 bits. Les probabilités d'apparition des différents vecteurs (données ou instructions) peuvent être variables, ainsi que celles des commandes.

Le générateur 7 de séquences de vecteurs à probabilités données comporte, en ce qui concerne les instructions, trois mémoires (du type mémoire vive RAM ou morte ROM) à savoir une mémoire 8 pour stocker les données, une mémoire 9 pour stocker les codes opérations et une mémoire 10 pour stocker les nombres de cycles correspondant aux divers codes opérations. De la même façon le générateur 7 comporte, en ce qui concerne les commandes, une mémoire 11 pour stocker les types de commande et une autre mémoire 12 pour stocker les nombres de cycles correspondant aux diverses commandes respectives.

Initialement on charge les diverses mémoires 8, 9, 10, 11, 12 en subdivisant le champ total de chaque mémoire en un certain nombre de zones d'étendues différentes, suivant les probabilités que l'on veut obtenir en sortie, chaque zone s'étendant en fait sur un nombre de positions élémentaires déterminé, dans chacune desquelles peut être chargé un octet. Par exemple, si on considère la mémoire 8 affectée aux données et si cette mémoire a une capacité totale de 2 048 octets, on peut charger huit fois dans cette mémoire les 256 configurations possibles pour les données et on retrouve alors en sortie une équiprobabilité d'apparition de chaque donnée. Par contre, on peut aussi charger dans cette mémoire 1 793 fois 00 et une fois chacune des 255 autres données. On aura alors à la sortie de la mémoire 8 une probabilité d'apparition de 1 793/2 048 = 7/8 pour 00 et 1/2 048 pour chaque autre valeur.

Le processus est identique pour la mémoire 9 contenant les codes opérations et la mémoire 11 contenant les commandes.

Du vecteur $b_4$ ... $b_{31}$ sont extraits deux vecteurs correspondant à des bits différents, par exemple un premier vecteur $V_1$ correspondant aux bits $b_4$ ... $b_{14}$, et un second vecteur $V_2$ correspondant aux bits $b_{15}$ ... $b_{25}$, le nombre total des bits des deux vecteurs $V_1$ et $V_2$ n'excédant pas 28 dans l'exemple considéré. Les deux vecteurs $V_1$ et $V_2$ ainsi constitués sont indépendants. Ils sont envoyés, le premier $V_1$ sur un bus 13a, et le second $V_2$ sur un bus 13b.

Pendant le test les vecteurs équiprobables $V_1$, $V_2$ issus du registre à décalage 5 sont envoyés respectivement sur le bus adresses 13a relié aux trois mémoires 8, 9, 10 associées respectivement aux données, aux codes opérations et aux nombres de cycles, et sur le bus 13b relié aux deux mémoires 11, 12 associées aux commandes.

Chacune de ces mémoires est donc adressée de façon équiprobable et la probabilité d'apparition d'une donnée, d'un code opération ou d'une commande à la sortie de la mémoire correspondante, ne dépend, en fait, que du nombre de fois où cette valeur aura été chargée dans la mémoire.

Ce dispositif permet aussi de masquer certaines données en leur affectant une probabilité nulle, c'est-à-dire en ne les chargeant pas du tout dans la mémoire 8.

La souplesse de ce dispositif, au point de vue des choix de probabilité, est naturellement proportionnelle à la taille de la mémoire utilisée.

La séquence de test est construite de la façon suivante: un code opération correspondant à une instruction à p cycles est suivi de (p - 1) données. Le code opération doit être tiré de façon aléatoire dans le champ des codes opérations contenus dans la mémoire 9 et de la même façon les données doivent être tirées également de manière aléatoire dans le champ des données de la mémoire 8. Au cours du remplissage de la mémoire 9 correspondant aux codes opérations on charge parallèlement, à la même adresse dans la mémoire 10, le nombre de cycles correspondant à chaque code opération. Les sorties de la mémoire 8 contenant les données et de la mémoire 9 contenant les codes opérations sont reliées, par des bus 14 et 15, à un aiguillage 16 dont la sortie est connectée au bus A transmettant les données appliquées aux deux microprocesseurs MR et MT.

La mémoire 10 est, de son côté, connectée, par un bus 16, à un compteur 17. Ce compteur 17 est relié à l'aiguillage 16 par une liaison 18. Ainsi, pendant un test, les deux mémoires 8, 9 sont adressées simultanément et en même temps que le code opération sélectionné est extrait de la mémoire 9 et est transmis, par le bus 15, l'aiguillage 16 et le bus A, aux deux microprocesseurs MR et MT, on charge simultanément dans le compteur 17 le nombre de cycles stocké dans la mémoire 10, à l'adresse correspondant à celle du code opération sélectionné dans la mémoire 9. Le compteur 17 est décrémenté d'une unité à chaque cycle et tant qu'il n'est pas remis à zéro, il maintient l'aiguillage 16 ouvert, ce qui permet l'envoi des données aux deux microprocesseurs sur le bus A. Quand le compteur 17 est remis à zéro, les deux microprocesseurs ont fini d'exécuter l'instruction et on peut alors envoyer un nouveau code opération.

Le fonctionnement est tout à fait similaire en ce qui concerne les commandes. En effet, la sortie de la mémoire 11 contenant les diverses commandes est reliée au bus B des commandes appliquées aux deux microprocesseurs tandis que la mémoire 12, contenant les nombres de cycles correspondant aux commandes respectives, est également reliée au compteur 17, par l'intermédiaire d'un bus 19. Ce bus 19 est également relié à un compteur additionnel 20 agissant sur un aiguillage 21 interposé sur le bus B des commandes. Le compteur 20 a pour rôle de maintenir une commande pendant un temps suffisant à son exécution correcte. La liaison au compteur 17 permet d'envoyer un code opération au moment où le microprocesseur l'attend, après l'exécution de la commande.

Le générateur de séquences aléatoires 3 comporte également une mémoire additionnelle 22 dans laquelle est stockée une séquence d'initialisation permettant de mettre, avant le test, les deux microprocesseurs MR et MT dans le même état. Cette mémoire 22 est reliée à l'aiguillage 16 par un bus données 23 et elle est adressée par un compteur 24 connecté également à l'aiguillage 16 par une liaison 25.

D'après la description qui précéde on voit que le dispositif de test aléatoire suivant l'invention permet d'affecter à priori des probabilités à chaque vecteur et ce grâce à une répartition choisie à volonté des données, des codes opérations et des commandes dans les champs des mémoires associées.

Le dispositif suivant l'invention peut admettre des variantes, notamment pour la comparaison entre les sorties produites par le circuit testé et par un circuit sans panne. Une variante intéressante est la suivante: les variables transmises par les bus c, a et d sortant du microprocesseur MT sont traitées par un circuit qui réalise une fonction compacte, appelée signature, de l'ensemble des bits qu'il reçoit. A la fin de la séquence de test cette signature est comparée à la signature d'un circuit bon, signature qui est préalablement mémorisée. Cette signature d'un circuit bon peut être obtenue soit par simulation, soit par l'utilisation d'un circuit de référence.

## Revendications

1. Dispositif de transformation de la probabilité d'apparition de vecteurs logiques comportant une mémoire (M) ou un circuit équivalent à laquelle sont appliqués des vecteurs logiques d'entrée (Ve1, Ve2 ... Ven) ayant des probabilités d'apparition respectives différentes ou égales, chaque vecteur d'entrée adressant une position élémentaire différente de la mémoire, caractérisé en ce que ladite mémoire contient, dans des zones respectives d'étendues différentes, les différentes catégories de vecteurs de sortie (Vs1, Vs2 ... Vsi) c'est-à-dire chaque vecteur de sortie est stocké un nombre de fois dans différentes positions élémentaires de la mémoire de manière que la probabilité d'apparition de ce vecteur qu'on peut obtenir en sortie dépende à la fois du nombre de positions élémentaires qu'englobe cette zone, et des probabilités respectives (pr1, pr2 ... prn) des vecteurs d'entrée (Ve1, Ve2 ... Ven) qui adressent les positions élémentaires (m1, m2 ... mn) de cette zone.

2. Dispositif générateur de séquences de vecteurs à probabilités variables dans le temps, utilisant au moins un dispositif de transformation de la probabilité d'apparition de vecteurs logiques suivant la revendication 1, caractérisé en ce qu'il comporte des mémoires (8 - 12) ou circuits équivalents contenant les différentes catégories de vecteurs ainsi que l'information nécessaire à l'identification de ces différentes catégories, et un séquenceur à base de circuits logiques permettant le séquencement des différents types de vecteurs dans le temps, en fonction de relations données, les sorties des mémoires ou circuits équivalents (8 - 12) étant connectées, par l'intermédiaire d'aiguillages (16, 21), à un ou plusieurs circuits destinés à les recevoir, tels que par exemple, des microprocesseurs (MR, MT).

3. Dispositif de test aléatoire pour circuits logiques, notamment microprocesseurs, utilisant un dispositif de transformation de la probabilité d'apparition de vecteurs logiques suivant la revendication 1 ou un dispositif générateur de séquences de vecteurs à probabilités variables dans le temps suivant la revendication 2, comportant une unité centrale (1), un générateur (3) de séquences aléatoires d'instructions et de commandes appliquées en parallèle à un microprocesseur de référence (MR) et au microprocesseur sous test (MT), un comparateur (4) aux entrées duquel sont connectées les sorties données, adresses et contrôle de chaque microprocesseur et dont la sortie est connectée à l'unité centrale, caractérisé en plus en ce que le générateur de séquences aléatoires (3) comporte un registre à décalage (5) bouclé en générateur de séquences de période maximale par un circuit OU exclusif (6), les cellules du registre correspondant à certains bits définis par une propriété mathématique connue étant connectées aux entrées du circuit OU exclusif (6), si bien que le registre à décalage (5) permet une génération pseudo-aléatoire de vecteurs équiprobables, qui sont appliqués à un générateur, caractérisé en plus en ce qu'il comporte, en ce qui concerne les instructions, trois mémoires à savoir une première mémoire (8) pour stocker les données, une deuxième mémoire (9) pour stocker les codes opérations et une troisième mémoire (10) pour stocker les nombres de cycles correspondant aux divers codes opérations, d'une part, et une quatrième mémoire (11) pour stocker les types de commande et une cinquième mémoire (12) pour stocker les nombres de cycles correspondant aux diverses commandes respectives, d'autre part, les sorties des première et deuxième mémoire (8, 9) étant connectées, respectivement par des bus (14, 15), à un premier aiguillage (16) dont la sortie est reliée en parallèle, par un bus données (A), au microprocesseur de référence (MR) et au microprocesseur sous test (MT), la sortie de la troisième mémoire (10) étant reliée en parallèle, par l'intermédiaire d'un bus (26), à un premier compteur (17) commandant, par une liaison (18), le premier aiguillage (16), la sortie de la quatrième mémoire (11) étant connectée, à travers un second aiguillage (21), à un bus commandes (B) relié en parallèle aux deux microprocesseurs (MR), (MT), la cinquième mémoire (12) étant connectée par sa sortie d'une part au premier compteur (17) et d'autre part à un second compteur (20) commandant le second aiguillage (21), et en ce qu'initialement on charge les diverses mémoires (8, 9, 10 11, 12) en subdivisant le champ total de chaque mémoire en un certain nombre de zones d'étendues différentes, suivant les probabilités que l'on veut obtenir en sortie.

4. Dispositif suivant la revendication 3 caractérisé en ce que le générateur de séquences aléatoires (3) comporte une mémoire additionnelle (22) dans laquelle est stockée une séquence d'initialisation destinée à mettre, avant le test, les deux microprocesseurs (MR) et (MT) ou autres circuits logiques comparés dans le même état, et cette mémoire est reliée au première aiguillage (16) par un bus données (23) et elle est adressée par un troisième compteur (24) connecté également à l'aiguillage (16) par une liaison (25).

5. Dispositif suivant l'une quelconque des revendications 3 et 4 caractérisé en ce que la comparaison entre les sorties du circuit sous test (MT) et les sorties du circuit de référence (MR) est effectuée par une comparaison de la "signature" du circuit sous test (MT), avec la "signature" que donnerait un circuit bon, le dispositif comportant alors un circuit qui réalise une fonction compacte ou "signature" à partir des bits constituant les variables de sortie du circuit logique sous test (MT), qui sont les variables transmises par les bus (c, a, d) sortant du circuit sous test (MT).

**Claims**

1. Device for transforming the occurrence probability of logic vectors, comprising a memory (M) or an equivalent circuit to which are applied input logic vectors (Ve1, Ve2 ... Ven) having different or equal respective occurrence probabilities, each input vector addressing a different elementary position of the memory, characterized in that said memory contains, in respective areas of different ranges, the different categories of output vectors (Vs1, Vs2 ... Vsi), that is to say each output vector is stored several times in different elementary positions of the memory, so that the occurrence probability of this vector which may be obtained at the output, depends both on the number of elementary positions that this zone covers, and the respective probabilities (pr1, pr2 ... prn) of the input vectors (Ve1, Ve2 ... Ven) which address the elementary positions (m1, m2 ... mn) of this area.

2. Device generating sequences of vectors with time-variable probabilities, using at least one device for transforming the occurrence probability of logic vectors according to claim 1, characterized in that it comprises memories (8 - 12) or equivalent circuits containing the different categories of vectors as well as the information necessary for identifying these different categories, and a sequencer based on logic circuits allowing the sequencing of the different types of vectors in time, as a function of given relationships, the outputs of the memories of equivalent circuits (8 - 12) being connected, via switches (16, 21), to one or more circuits adapted to receive them, such as for example microprocessors (MR, MT).

3. Random testing device for logic circuits, particularly microprocessors, using a device for transforming the occurrence probability of logic vectors according to claim 1 or a device generating sequences of vectors with time-variable probabilities, according to claim 2, comprising a central unit (1), a generator (3) of random sequences of instructions and orders applied in parallel to a reference microprocessor (MR) and to the microprocessor (MT) being tested, a comparator (4) at the inputs of which are connected the data, address and monitoring outputs of each microprocessor and of which the output is connected to the central unit, further characterized in that the random sequence generator (3) comprises a shift register (5) looped as a sequence generator of maximum period by an exclusive OR circuit (6), the cells of the register corresponding to certain bits defined by a known mathematical property being connected to the inputs of the exclusive OR circuit (6), so that the shift register (5) allows a pseudorandom generation of equiprobable vectors, which are applied to a generator, further characterized in that comprises, concerning the instructions, three memories, namely a first memory (8) for storing the data, a second memory (9) for storing the operation codes and a third memory (10) for storing the number of cycles corresponding to the various operation codes, on the one hand, and a fourth memory (11) for storing the types of order and a fifth memory (12) for storing the numbers of cycles corresponding to the various respective orders, on the other hand, the outputs of the first and second memory (8, 9) being connected, respectively by busses (14,15), to a first switch (16) of which the output is connected in parallel, by a data bus, (A), to the reference microprocessor (MR) and to the microprocessor (MT) being tested, the output of the third memory (10) being connected in parallel, via a bus (26), to a first counter (17) controlling, by a link (18), the first switch (16), the output of the fourth memory (11) being connected, through a second switch (21), to an order bus (B) connected in parallel to the two microprocessors (MR), (MT), the fifth memory (12) being connected by its output on the one hand to the first counter (17) and on the other hand to a second counter (20) controlling the second switch (21), and in that initially, the various memories (8, 9, 10, 11, 12) are loaded by subdividing the total field of each memory into a certain number of areas of different ranges, depending on the probabilities that it is desired to obtain at the output.

4. Device according to claim 3, characterized in that the random sequence generator (3) comprises an additional memory (22) in which is stored an initialization sequence intended to place the two microprocessors (MR) and (MT) or other compared logic circuits in the same state, before the test, and this memory is connected to the first switch (16) by a data bus (23) and it is addressed by a third counter (24) also connected to switch (16) by a link (25).

5. Device according to either one of claims 3 and 4, characterized in that the comparison between the outputs of the circuit (MT) being tested and the outputs of the reference circuit (MR) is effected by a comparison of the "signature" of the circuit (MT) being tested, with the "signature" which a good circuit would give, the device in that case comprising a circuit which performs a compact function or "signature" from the bits constituting the output variables of the logic circuit (MT) being tested, which are the variables transmitted by busses (c, a, d) leaving the circuit (MT) being tested.

**Patentansprüche**

1. Einrichtung zur Umwandlung der Wahrscheinlichkeit des Auftretens von logischen Vektoren, mit einem Speicher (M) oder einem äquivalenten Schaltkreis, dem logische Eingangsvektoren (Ve1, Ve2 ... Ven) zugeführt sind, die entsprechende, verschiedene oder gleiche Wahrscheinlichkeiten des Auftretens aufweisen und von denen jeder einen verschiedenen Speicherplatz des Speichers adressiert, dadurch gekennzeichnet, daß der Speicher in entsprechenden Zonen verschiedener Größen verschiedene Kategorien von Ausgangsvektoren (Vs1, Vs2 ... Vsi) enthält, d.h. daß jeder Ausgangsvektor eine Anzahl von Malen in verschiedenen Speicherplätzen des Speichers gespeichert ist, derart, daß die Wahrscheinlichkeit des Auftretens des betreffenden Vektors, den man am Ausgang erhalten kann, sowohl von der Anzahl der Speicherplätze, die die betreffende Zone umfaßt, als auch von den jeweiligen Wahrscheinlichkeiten (pr1, pr2 ... prn) Eingangsvektoren (Ve1, Ve2 ... Ven), die die Speicherplätze (m1, m2 ... mn) der betreffenden Zone adressieren, abhängt.

2. Einrichtung zum Erzeugen von Folgen von Vektoren mit in der Zeit variablen Wahrscheinlichkeiten unter Verwendung mindestens einer Einrichtung zur Umwandlung der Wahrscheinlichkeit des Auftretens von logischen Vektoren gemäß Anspruch 1, dadurch gekennzeichnet, daß sie Speicher (8 - 12) oder äquivalente Schaltkreise, die verschiedene Kategorien von Vektoren sowie die zur Identifizierung dieser verschiedenen Kategorien nötige Information enthalten, und eine Sequenzeinrichtung auf der Basis logischer Schaltkreise enthält, welche die Aufeinanderfolge der verschiedenen Typen von Vektoren in der Zeit in Abhängigkeit von gegebenen Relationen gestattet, wobei die Ausgänge der Speicher oder äquivalenten Schaltkreise (8 - 12) über Weichen (16, 21) mit einer oder mehreren für den Empfang bestimmten Schaltungen, beispielsweise Mikroprozessoren (MR, MT), verbunden sind.

3. Einrichtung zur Zufallsprüfung für logische Schaltungen, insbesondere Mikroprozessoren, unter Verwendung einer Einrichtung zur Umwandlung der Wahrscheinlichkeit des Auftretens von logischen Vektoren gemäß Anspruch 1 oder einer Einrichtung zum Erzeugen von Sequenzen von Vektoren mit variablen zeitlichen Wahrscheinlichkeiten gemäß Anspruch 2, mit einer Zentraleinheit (1), einem Generator (3) für zufällige Folgen von Befehlen und Kommandos, die einem Bezugs-Mikroprozessor (MR) und einem zu prüfenden Mikroprozessor (MT) parallel zugeführt sind, einem Vergleicher (4), dessen Eingängen die Daten-, Adressen- und Steuer-Ausgänge jedes Mikroprozessors zugeführt sind und dessen Ausgang mit der Zentraleinheit verbunden ist, dadurch gekennzeichnet, daß außerdem der Generator (3) für die zufälligen Folgen ein Schieberegister (5), das als Generator für Folgen mit einer maximalen Periode durch eine Exklusiv-ODER-Schaltung (6) zu einer Schleife geschaltet ist, wobei die Zellen des Registers, welche bestimmten Bits entsprechen, die durch eine bekannte mathematische Eigenschaft definiert sind, mit Eingängen der Exklusiv-ODER-Schaltung (6) verbunden sind, so daß das Schieberegister (5) eine pseudo-zufällige Erzeugung von Vektoren gleicher Wahrscheinlichkeit gestattet, die einem Generator zugeführt sind, daß sie außerdem zusätzlich, soweit es die Befehle angeht, drei Speicher, nämlich einen ersten Speicher (8) zum Speichern der Daten, einen zweiten Speicher (9) zum Speichern der Operationscode und einen dritten Speicher (10) zum Speichern der Anzahl der Zyklen entsprechend den verschiedenen Operationscode einerseits und einen vierten Speicher (11) zum Speichern der Typen der Kommandos und einen fünften Speicher (12) zum Speichern der Anzahl der Zyklen entsprechend den jeweiligen verschiedenen Kommandos andererseits enthält, wobei die Ausgänge des ersten und des zweiten Speichers (8, 9) jeweils über Busse (14, 15) mit einer ersten Weiche, deren Ausgang parallel über einen Datenbus (A) mit dem Referenz-Mikroprozessor (MR) und dem zu prüfenden Mikroprozessor (MT) verbunden sind, der Ausgang des dritten Speichers (10) parallel über einen Bus (26) mit einem ersten Zähler (15) verbunden ist, der über eine Verbindung (18) die erste Weiche (16) steuert, der Ausgang des vierten Speichers (11) über eine zweite Weiche (21) mit einem Kommandobus (8) verbunden ist, der parallel mit den beiden Mikroprozessoren (MR), (MT) verbunden ist, der fünfte Speicher (12) mit seinem Ausgang einerseits mit dem ersten Zähler (17) und andererseits mit einem zweiten Zähler (20) verbunden ist, welcher die zweite Weiche (21) steuert und daß man anfangs die verschiedenen Speicher (8, 9, 10, 11, 12) lädt, indem man das ganze Feld jedes Speichers in eine gewisse Anzahl von Zonen verschiedener Größen entsprechend den Wahrscheinlichkeiten, die man am Ausgang zu erhalten wünscht, unterteilt.

4. Einrichtung nach Anspruch 3, dadurch gekennzeichnet, daß der Generator (3) für die zufälligen Folgen einen zusätzlichen Speicher (22) enthält, in dem eine Initialisierungssequenz gespeichert ist, die bestimmt ist, die beiden Mikroprozessoren (MR) und (MT) oder anderen verglichenen logischen Schaltungen in den gleichen Zustand zu bringen, und daß dieser Speicher mit der ersten Weiche (6) über einen Datenbus (23) verbunden ist und durch einen dritten Zähler (24) adressiert ist, welcher ebenfalls mit der Weiche (16) über eine Verbindung (25) verbunden ist.

5. Einrichtung nach einem der Ansprüche 3 und 4, dadurch gekennzeichnet, daß der Vergleich der Ausgangssignale der geprüften Schaltung (MT) und der Ausgangssignale der Referenzschaltung (MR) durch einen Vergleich der "Signatur" der geprüften Schaltung (MT) mit der "Signatur", die eine gute Schaltung liefert, bewirkt wird, wobei die Einrichtung außerdem eine Schaltung enthält, die eine kompakte Funktion oder "Signatur" ausgehend von den Bits realisiert, die die Veränderlichen der Ausgangssignale der geprüften logischen Schaltung (MT) darstellen, welche die Veränderlichen sind, die durch die Busse (c, a, d) übertragen werden, die von der geprüften Schaltung (MT) ausgehen.

## Fig:1

$Ve1(pr1)$

$Ve2(pr2)$

$Ven(prn)$

| $V_{\Delta}1$ $m1$ | $V_{\Delta}1$ $m2$ | $V_{\Delta}1$ $m_3$ | | | |
|---|---|---|---|---|---|
| $V_{\Delta}1$ | $V_{\Delta}2$ | $V_{\Delta}3$ | | | |
| | | | | | |
| $V_{\Delta}i$ | $V_{\Delta}i$ | $V_{\Delta}i$ | | | |
| $V_{\Delta}i$ | $V_{\Delta}i$ | $V_{\Delta}i$ | | $mn-1$ | $mn$ |

$V_{\Delta}1(pr1)$

$V_{\Delta}2(p'r2)$

$V_{\Delta}i(pri)$

## Fig. 2

$Ve_1, Ve_2 \ldots \ldots Ve_{16}$

| | | | |
|---|---|---|---|
| 00 | 00 | 01 | 01 |
| 00 | 00 | 01 | 11 |
| 00 | 00 | 11 | 11 |
| 00 | 00 | 11 | 11 |

$V_b$

| $\underline{00}$ | $\underline{01}$ | $\underline{10}$ | $\underline{11}$ |
|---|---|---|---|
| $\left(pr = \dfrac{8}{16}\right)$ | $\left(pr = \dfrac{3}{16}\right)$ | $\left(pr = \dfrac{0}{16}\right)$ | $\left(pr = \dfrac{5}{16}\right)$ |

## Fig. 3